## Europäisches Patentamt
## European Patent Office
## Office européen des brevets

(19)

(11) Veröffentlichungsnummer: **0 158 723 B2**

(12) **NEUE EUROPÄISCHE PATENTSCHRIFT**

(45) Veröffentlichungstag der neuen Patentschrift:
**11.12.91 Patentblatt 91/50**

(51) Int. Cl.⁵: **G06F 1/00, H04N 5/645**

(21) Anmeldenummer: **84115050.1**

(22) Anmeldetag: **10.12.84**

(54) **Bildschirmgerät.**

(30) Priorität: **14.02.84 DE 3405223**

(43) Veröffentlichungstag der Anmeldung:
**23.10.85 Patentblatt 85/43**

(45) Bekanntmachung des Hinweises auf die
Patenterteilung:
**11.05.88 Patentblatt 88/19**

(45) Bekanntmachung des Hinweises auf die
Entscheidung über den Einspruch:
**11.12.91 Patentblatt 91/50**

(84) Benannte Vertragsstaaten:
**DE FR GB IT SE**

(56) Entgegenhaltungen:
**EP-A- 0 021 094**
**EP-A- 0 144 258**
**DE-A- 3 036 852**
**DE-U- 7 919 933**

(73) Patentinhaber: **TANDBERG DATA A/S**
**Kjelsasveien 161 Postboks 9 Korsvoll**
**N-0808 Oslo 8 (NO)**

(72) Erfinder: **Helgeland, Olav**
**Huseby 8**
**N-01482 Nittedal (NO)**

(74) Vertreter: **Goddar, Heinz J., Dr. et al**
**FORRESTER & BOEHMERT**
**Widenmayerstrasse 4/I**
**W-8000 München 22 (DE)**

EP 0 158 723 B2

Jouve, 18, rue Saint-Denis, 75001 PARIS

**Beschreibung**

Die Erfindung bezieht sich auf ein Bildschirmgerät entsprechend dem Oberbegriff des Patentanspruches 1.

Es ist bereits eine Vielzahl von Bildschirmgeräten bekannt, bei denen in einem Gehäuse eine Bildröhre untergebracht ist, die üblicherweise als Kathodenstrahlröhre ausgebildet ist. Beispielsweise ist der DE-OS-3036852 ein Bildschirmgerät zu entnehmen, bei dem das Gehäuse aus zwei Teilen zusammengesetzt ist, wobei ein Grundgehäuse den rückwärtigen Teil der Bildröhre umfasst und ein Rahmen die eigentliche Bildfläche umfasst und mit dem Grundgehäuse verbunden ist. Das Grundgehäuse ist bei diesem bekannten Bildschirmgerät auf einem höhenverstellbaren Standfuss angeordnet. Es ist auch möglich, derartige Gehäuse auf einer quaderförmigen Steuereinheit anzuordnen, die ausser elektronischen Baugruppen auch Speichereinheiten, wie beispielsweise Diskettenspeicher, enthalten kann.

Es ist allgemein bekannt, Bildschirmgeräte mit unterschiedlichen grossen Bildröhren zu verwenden. Für die Darstellung von Texten sind beispielsweise Bildschirmdiagonalen von 12 Zoll bis 17 Zoll üblich. Weiterhin sind Schwarz/Weiss- und Farbdarstellungen üblich, wobei bei gleicher Bildfläche die Bildröhren eine unterschiedliche Länge und/oder unterschiedliche Form aufweisen. Die Gehäuse der Bildschirmgeräte sind an die jeweiligen Bildröhren angepasst, so dass die Grundgehäuse und die Rahmen sowohl hinsichtlich ihrer Form als auch hinsichtlich ihrer Grösse verschieden ausgebildet sind. Die Fertigung derartiger Bildschirmgeräte erfordert einen verhältnismässig grossen Aufwand, da für die verschiedenen Bildröhren die verschiedenen Gehäuse hergestellt werden müssen und somit unterschiedliche Werkzeuge für die Herstellung erforderlich sind. Auch die Lagerhaltung ist verhältnismässig aufwendig, da eine Vielzahl von verschiedenen Gehäusen bereitgehalten werden muss.

Die EP-A-0144258 beschreibt ein Bildschirmgerät mit einer Bildröhre und einem die Bildröhre umgebenden Gehäuse. Das Gehäuse wird aus einem den rückwärtigen Teil der Bildröhre umgebenden Grundgehäuse und einem mit diesem verbundenen, die Bildfläche der Bildröhre umfassenden Rahmen gebildet. Der Rahmen ist zweiteilig ausgebildet, wobei der erste Teil das eigentliche tragende Element der Bildröhre ist, und der zweite Teil sowie das Grundgehäuse werden an diesem ersten Teil befestigt. In dem ersten Teil des Rahmens können Bildröhren einer vorgegebenen Grösse oder gegebenenfalls, durch besondere Halterungen, kleinere Bildröhren eingesetzt werden. Bei der Verwendung von kleineren Bildröhren weist der zweite Teil des Rahmens eine kleinere Öffnung für die Bildfläche auf. Die äusseren Abmessungen sind jedoch gleich. Die Verwendung von grösseren Bildröhren ist bei diesem bekannten Bildschirmgerät nicht vorgesehen und auch nicht ohne weiteres möglich, da dann nicht nur der Rahmen geändert werden muss, sondern bei diesem auch die daran befestigte Traganordnung geändert werden muss, was einen verhältnismässig grossen Aufwand bedeutet.

Der Erfindung liegt daher die Aufgabe zugrunde, ein Bildschirmgerät anzugeben, das hinsichtlich des Gehäuses bei der Fertigung und bei der Lagerhaltung einen geringen Aufwand erfordert.

Erfindungsgemäss wird diese Aufgabe bei dem Bildschirmgerät der eingangs genannten Art durch die im kennzeichnenden Teil des Patentanspruchs 1 angegebenen Merkmale gelöst.

Das Bildschirmgerät gemäss der Erfindung hat den Vorteil, dass es kostengünstig hergestellt werden kann, da das Grundgehäuse trotz der Verwendung der verschiedenen Bildröhren einheitlich ausgebildet ist und mit einem Werkzeug herstellbar ist. Die Bildröhren werden bereits in der Fertigung in die verschiedenen Rahmen eingesetzt und justiert. Je nach Kundenwunsch können dann verschiedene Rahmen mit den entsprechenden Bildröhren in das Grundgehäuse eingesetzt werden. In dem Grundgehäuse sind Platinen vorgesehen, die elektrisch und/oder elektronische Bauteile enthalten. Insbesondere ist es zweckmässig, in allen Grundgehäusen diejenigen Bauteile einzusetzen, die für alle Bildschirmgeräte einheitlich sind und dann entsprechend der jeweils eingesetzten Bildröhre Anpassungseinheiten einzusetzen.

Es erweist sich insbesondere als zweckmässig, die Halterungen im oder am Grundgehäuse achsensymmetrisch auszubilden, so dass die Bildröhren und die Rahmen horizontal oder vertikal eingebaut werden können.

Die Halterungen können mit dem Grundgehäuse eine Einheit bilden. Es erweist sich jedoch als vorteilhaft, die Halterungen an Grundplatinen des Bildschirmgeräts anzubringen, die innerhalb des Grundgehäuses angeordnet sind. Für einen horizontalen und vertikalen Einbau der Bildröhre sind die Halterungen achsensymmetrisch ausgebildet. Zweckmässigerweise sind die Halterungen dann auf den Umrissen eines Quadrats oder eines Kreises angeordnet.

Das Grundgehäuse ist bei einer bevorzugten Ausführungsform becherförmig ausgebildet und umfasst die Halterungen mindestens teilweise. Zweckmässigerweise weist auch dieses Grundgehäuse einen quadratischen oder rechteckförmigen Querschnitt auf oder ist kubusförmig ausgebildet.

Die Bildröhre kann am Grundgehäuse befestigt werden. Zweckmässigerweise wird sie jedoch am Rahmen befestigt und vor dem Einbau sowohl mechanisch als auch elektronisch justiert. Der Rahmen selbst kann, vorzugsweise bei kleinen Bildschirmdiagonalen einteilig und vorzugsweise bei grösseren Bildschirmdiagonalen mehrteilig ausgebildet sein. Die einzelnen Teile des Rahmens können dabei miteinander verschraubt werden oder aus Kostengründen unter Verwendung eines Schnappverschlusses miteinander verbunden werden. Entsprechendes gilt für die Befestigung des Rahmens an der Halterung.

Ausführungsbeispiele des Bildschirmgeräts gemäss der Erfindung werden im folgenden anhand von Zeichnungen näher erläutert. Es zeigen:

Fig. 1 eine Vorderansicht eines ersten Bildschirmgeräts;

Fig. 2 eine Seitenansicht des ersten Bildschirmgeräts;

Fig. 3 eine Draufsicht auf das erste Bildschirmgerät;

Fig. 4 eine Vorderansicht eines zweiten Bildschirmgeräts;

Fig. 5 eine Seitenansicht des zweiten Bildschirmgeräts;

Fig. 6 eine Draufsicht auf das zweite Bildschirmgerät;

Fig. 7 einen Querschnitt durch das erste Bildschirmgerät;

Fig. 8 einen vergrösserten Ausschnitt aus dem Querschnitt nach Fig. 7;

Fig. 9 einen weiteren vergrösserten Ausschnitt aus dem Querschnitt nach Fig. 7.

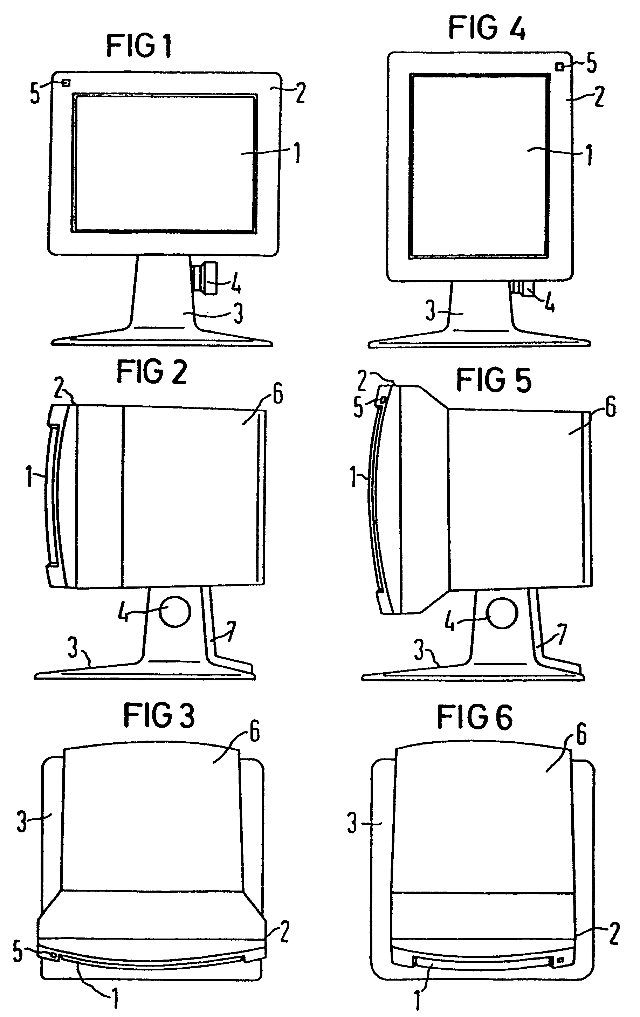

Bei dem in Fig. 1 dargestellten Bildschirmgerät ist eine Bildröhre mit einer Bildfläche 1 in einem Gehäuse angeordnet, von dem in der dargestellten Vorderansicht nur ein die Bildfläche 1 umgebender Rahmen 2 dargestellt ist. Das Gehäuse ist auf einem Fuss 3 angeordnet, der derart ausgebildet sein kann, dass das Gehäuse mittels eines Drehgriffs 4 höhenverstellbar ist. Weiterhin kann das Gehäuse drehbar und-/oder neigbar auf dem Fuss 3 befestigt sein. Im Rahmen 2 kann in der linken doer rechten oberen Ecke eine Öffnung vorgesehen sein, hinter der sich ein lichtempfindliches Element 5 befindet, das eine Anpassung der Helligkeit der Darstellung an der Bildfläche 1 an die jeweilige Umgebungshelligkeit ermöglicht.

Die in Fig. 2 dargestellte Seitenansicht des Bildschirmgeräts zeigt ein Grundgehäuse 6, das den hinteren Teil der Bildröhre umfasst und beispielsweise becherförmig oder kubusförmig ausgebildet ist und von hinten über den rückwärtigen Teil der Bildröhre und im Gehäuse enthaltene Grundplatinen mit elektrischen Bauteilen geschoben ist. Der die Bildfläche 1 der Bildröhre umfassende Rahmen 2 ist im dargestellten Ausführungsbeispiel zweiteilig ausgebildet und besteht aus einem vorderen Rahmenteil und einem zwischen diesem und dem Grundgehäuse 6 angeordneten Rahmenteil.

Das Grundgehäuse 6 ist auf dem Fuss 3 angeordnet. An der rückwärtigen Seite des Fusses 3 befindet sich eine Abdeckung 7, die einen Kabelkanal bildet für ein Netzkabel und für Verbindungskabel zwischen dem Bildschirmgerät und einer Steuereinheit und-/oder einer Tastatur.

Der Rahmen 2 kann unmittelbar mit dem Grundgehäuse 6 verbunden werden und mit diesem beispielsweise verschraubt oder verschnappt werden. Es erweist sich jedoch als zweckmässig, in dem Grundgehäuse 6 an den Grundplatinen Halterungen vorzusehen. In diese Halterungen sind nun je nach Anwendungsfall, verschieden grosse Rahmen 2 mit den entsprechenden Bildröhren einsetzbar. Die Diagonalen der Bildflächen 1 der Bildschirme betragen beispielsweise zwischen 12 Zoll und 17 Zoll, und die Bildröhren können auch für eine Schwarz/Weiss-Darstellung oder für eine mehrfarbige Darstellung ausgebildet sein. Das Grundgehäuse 6 bleibt in jedem Fall das gleiche, und es werden lediglich verschiedene Rahmen 2, die an die jeweiligen Bildröhren angepasst sind, in das Grundgehäuse 6 eingesetzt. Es ist auch möglich, denselben Rahmen 2 horizontal oder vertikal einzubauen, so dass beispielsweise eine Seite DIN A4 Hochformat an der Bildfläche 1 darstellbar ist. Um auch diese Art des Einbaus zu ermöglichen, sind die Halterungen zweckmässigerweise achsensymmetrisch ausgebildet, so dass der unterschiedliche Einbau des Rahmens 2 auf einfache Weise entweder werkseitig oder beim Kunden möglich ist.

Die in Fig. 3 dargestellte Draufsicht auf das Bildschirmgerät zeigt wiederum das Grundgehäuse 6, das zweckmässigerweise an der Öffnung zum Rahmen 2 hin ebenfalls einen achsensymmetrischen Querschnitt aufweist. Dieser Querschnitt ist vorzugsweise quadratisch, und es ist auch möglich, diesen Querschnitt kreisförmig auszubilden.

Bei den Darstellungen in den Fig. 1 bis 3 sind die Bildröhre und der Rahmen 2 horizontal eingebaut. Infolge der rechteckförmigen Ausgestaltung der Bildfläche 1 hat dies zur Folge, dass der Rahmen 2, wie es in Fig. 2 dargestellt ist, auf der Oberseite und der Unterseite mit dem Grundgehäuse 6 etwa fluchtend ausgebildet ist. In bezug auf die Seitenwände des Grundgehäuses 6 ist der Rahmen jedoch, wie in Fig. 3 zu erkennen ist, keilförmig oder konisch ausgebildet, um den Rahmen 2 an das Grundgehäuse bezüglich der Form anzupassen.

Falls kleine Bildröhren verwendet werden und die Bildfläche 1 nicht grösser ist als der Querschnitt des Grundgehäuses 6, kann der Rahmen 2 auch einteilig ausgebildet sein, und die Bildfläche 1 ragt in diesem Fall nicht oder nur geringfügig aus dem Grundgehäuse 6 heraus.

Bei der Darstellung in Fig. 4 sind der Rahmen 2 und die Bildröhre mit der Bildfläche 1 vertikal in das Grundgehäuse 6 eingesetzt, so dass eine hochformatige Darstellung an der Bildfläche 1 möglich ist. Falls derselbe Rahmen 2 wie bei dem in den Fig. 1 bis 3 dargestellten Bildschirmgerät verwendet wird, erfolgt der Einbau des Rahmens 2 derart, dass die Öffnung für das lichtempfindliche Element 5 sich wiederum in einer oberen Ecke befindet, so dass die Umgebungshelligkeit möglichst gut gemessen werden kann.

Die in Fig. 5 dargestellte Seitenansicht des Bildschirmgeräts zeigt, dass dasselbe Grundgehäuse 6, derselbe Fuss 3 und gegebenenfalls derselbe Rahmen 2 verwendet werden. Entsprechend der in Fig. 3 dargestellten Draufsicht bei dem horizontal eingebauten Rahmen 2 ragt nun bei dem vertikalen Einbau des Rahmens 2 dieser an der Oberseite und der Unterseite des Grundgehäuses 6 über dieses heraus.

Bei der in Fig. 6 dargestellten Draufsicht auf das Bildschirmgerät ist, im Gegensatz zu der in Fig. 3 dargestellten Draufsicht zu erkennen, dass nunmehr der Rahmen 2 seitlich nicht oder nur geringfügig über das Grundgehäuse 6 hinausragt, wie es bei dem in Fig. 2 dargestellten horizontalen Einbau an der Oberseite und der Unterseite des Grundgehäuses 6 ebenfalls der Fall ist.

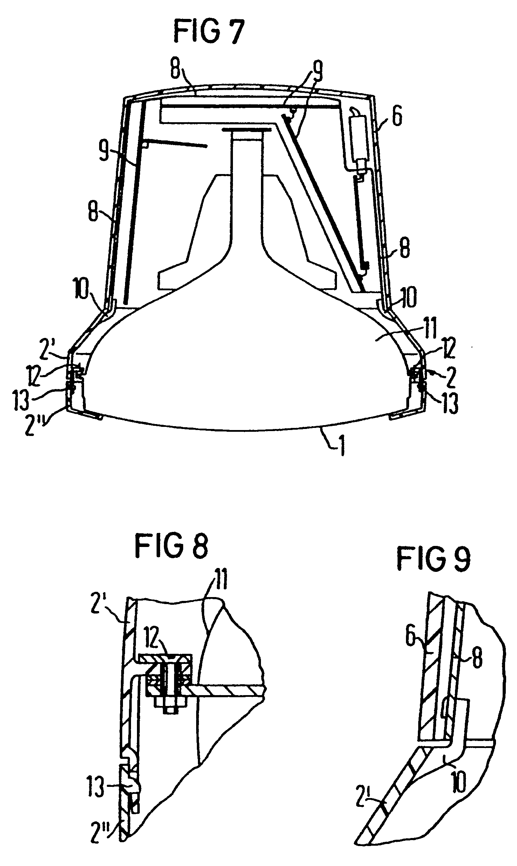

Bei dem in Fig. 7 dargestellten Schnittbild durch das Bildschirmgerät entsprechend den Fig. 1 bis 3 sind in dem Grundgehäuse 6 Grundplatinen 8 angeordnet, die einerseits elektrische Bauteile enthalten können und die andererseits als Halterungen für elektronische Baugruppen 9 ausgebildet sind. Zusätzlich sind an den Grundplatinen 8 in der Nähe der Öffnung des Grundgehäuses 6 die Halterungen 10 für die Befestigung der möglichen verschiedenen Rahmen 10 und für den horizontalen oder vertikalen Einbau der Rahmen 2 vorgesehen. Die Bildröhre 11 kann beim Zusammenbau des Bildschirmgeräts vor der Befestigung des Rahmens im Grundgehäuse 6, beispielsweise an den Grundplatinen 8 befestigt werden. Es erweist sich jedoch als zweckmässig, insbesondere bei der zweiteiligen Ausgestaltung des Rahmens 2 die Bildröhre 11 zunächst im hinteren Rahmenteil mittels Befestigungen 12 zu befestigen und dann die Bildröhre gemeinsam mit dem Rahmenteil 2' im Grundgehäuse 6 an den Grundplatinen 8 mittels der Halterungen 10 zu befestigen. Der vordere Rahmenteil 2″ kann anschliessend oder vor der Befestigung des hinteren Rahmenteils 2' mit der Bildröhre 11 mittels einer Befestigung 13 am hinteren Rahmenteil 2' befestigt werden.

Der in Fig. 8 dargestellte vergrösserte Ausschnitt aus der Fig. 7 zeigt die Befestigung 12, mittels der die Bildröhre 11 am hinteren Rahmenteil 2' befestigt wird. Diese Befestigung wird zweckmässigerweise aus am Umfang der Bildröhre 11 angeordneten Schrauben gebildet, mittels derer die Bildröhre 11 an nach innen gerichteten Teilen des hinteren Rahmenteils 2' verschraubt wird.

Weiterhin zeigt die Fig. 8 die Befestigung 13, mittels der das vordere Rahmenteil 2″ mit dem hinteren Rhamenteil 2' verbunden ist. Diese Verbindung ist beispielsweise als formschlüssige Verbindung, insbesondere als Schnappverschluss ausgebildet, wobei ein hakenförmig ausgebildetes Teil des vorderen Rahmenteils 2″ in eine entsprechende Öffnung an einer Rippe des hinteren Rahmenteils 2' eingreift.

Die Befestigung des hinteren Rahmenteils 2' an den Grundplatinen 8 mittels der Halterung 10 ist beispielsweise ebenfalls als formschlüssige Verbindung und insbesondere als Schnappverschluss ausgebildet. Hierzu weist das hintere Rahmenteil 2' eine hakenförmige Ausbildung auf, die in eine entsprechende Öffnung der Grundplatine 8 eingreift. Es wäre denkbar, das hintere Rahmenteil 2' mit dem Grundgehäuse 6 unmittelbar unter Verwendung der Halterung 10 zu verbinden, jedoch hat die Verbindung mit der Grundplatine 8 den Vorteil, dass sie eine grössere Stabilität aufweist, da die Grundplatinen 8 aus einem metallischen Werkstoff bestehen, während das Grundgehäuse 6, ebenso wie der Rahmen 2 aus einem Kunststoff bestehen, und andererseits hat es den Vorteil, dass das Grundgehäuse 6 für Wartungszwecke sehr einfach abgenommen werden kann und die an der Grundplatine 8 befestigten Bauteile und Baugruppen dann leicht zugänglich sind.

Die Befestigung mittels der Halterung 10 ist als lösbare Befestigung ausgebildet, um auf einfache Weise werkseitig oder beim Kunden andere Rahmen 2 mit Bildröhren 11 einzusetzen oder den vorhandenen Rahmen 2 mit der Bildröhre 11 um 90° gedreht einzubauen. Falls ein werkseitig vorbereiteter Rahmen 2 und eine zugehörige Bildröhre 11 eingesetzt werden, hat dies den Vorteil, dass diese bereits sowohl mechanisch als auch elektronisch justiert sind und dadurch der Einbau auf einfache Weise erfolgen kann. Gegebenenfalls können auch zugehörige Baugruppen 9 sehr einfach ausgetauscht werden.

Anstelle des Fusses 3 kann das Gehäuse auch auf andere Weise aufgestellt sein. Beispielsweise kann es auf einer Steuereinheit montiert werden, die zusätzlich Speichereinheiten, wie beispielsweise Diskettenlaufwerke enthält, oder es ist auch möglich, das Gehäuse an einer Halterung zu befestigen, die als Ausleger ausgebildet ist und an einem Arbeitstisch befestigbar ist.

**Patentansprüche**

1. Bildschirmgerät mit einer Bildröhre (11) und einem die Bildröhre (11) umgebenden Gehäuse, wobei das Gehäuse ein den rückwärtigen Teil der Bildröhre (11) umgebendes Grundgehäuse (6) und einen mit diesem verbundenen, die Bildfläche (1) der Bildröhre (11) umfassenden Rahmen (2) aufweist, dadurch gekennzeichnet, dass an dem Grundgehäuse (6) entsprechend einer jeweils verwendeten Bildröhre ein verschieden grosser Rahmen (2) ohne Änderung des Grundgehäuses (6) horizontal oder vertikal befestigbar ist.

2. Bildschirmgerät nach Anspruch 1, dadurch gekennzeichnet, dass der Rahmen (2) an Grundplatinen (8) des Grundgehäuses (6) des Bildschirmgerätes befestigbar ist.

3. Bildschirmgerät nach Anspruch 1, dadurch gekennzeichnet, dass der Rahmen (2) am Grundgehäuse (6) selbst unmittelbar befestigt ist.

4. Bildschirmgerät nach einem der Ansprüche 1 bis 3, dadurch gekennzeichnet, dass der Rahmen (2) am Grundgehäuse (6) achsensymmetrisch befestigbar ist.

5. Bildschirmgerät nach einem der Ansprüche 1 bis 4, dadurch gekennzeichnet, dass das Grundgehäuse (6) einen achsensymmetrischen Querschnitt aufweist.

6. Bildschirmgerät nach einem der Ansprüche 1 bis 5, dadurch gekennzeichnet, dass das Grundgehäuse (6) kubusartig ausgebildet ist, wobei an einer offenen Fläche die unterschiedlichen Rahmen (2) befestigbar sind.

7. Bildschirmgerät nach einem der Ansprüche 1 bis 6, dadurch gekennzeichnet, dass die Bildröhre (11) im Rahmen (2) befestigt ist.

8. Bildschirmgerät nach einem der Ansprüche 1 bis 7, dadurch gekennzeichnet, dass der Rahmen (2) einteilig ausgebildet ist.

9. Bildschirmgerät nach einem der Ansprüche 1 bis 8, dadurch gekennzeichnet, dass der Rahmen (2) mehrteilig ausgebildet ist.

10. Bildschirmgerät nach Anspruch 9, dadurch gekennzeichnet, dass die Teile (2', 2'') des mehrteiligen Rahmens (2) miteinander durch einen Schnappverschluss (12) verbunden sind.

11. Bildschirmgerät nach einem der Ansprüche 1 bis 10, dadurch gekennzeichnet, dass der Rahmen (2) am Grundgehäuse (6) lösbar befestigbar ist.

12. Bildschirmgerät nach einem der Ansprüche 1 bis 11, dadurch gekennzeichnet, dass in einer oberen Ecke des Rahmens (2) eine Öffnung für ein lichtempfindliches Element angeordnet ist.

## Claims

1. A visual display unit comprising a picture tube (11) and a housing which surrounds the picture tube (11), where the housing consists of a basic housing (6) which surrounds the rear part of the picture tube (11) and of a frame (2) which is connected to the basic housing (6) and which encloses the picture field (1) of the picture tube (11), characterised in that in accordance with the respective picture tube which is being used a different sized frame (2) can be attached horizontally or vertically to the basic housing (6) without changing the basic housing (6).

2. A visual display unit as claimed in Claim 1, characterised in that the frame (2) can be attached to base plates (8) of the basic housing (6) of the visual display unit.

3. A visual display unit as claimed in Claim 1, characterised in that the frame (2) is directly attached to the basic housing (6) itself.

4. A visual display unit as claimed in one of Claims 1 to 3, characterised in that the frame (2) can be axially symmetrically attached to the basic housing (6).

5. A visual display unit as claimed in one of Claims 1 to 4, characterised in that the basic housing (6) has an axially symmetrical cross-section.

6. A visual display unit as claimed in one of Claims 1 to 5, characterised in that the basic housing (6) is cube-shaped and the different frames (2) can be attached to an open surface.

7. A visual display unit as claimed in one of Claims 1 to 6, characterised in that the picture tube (11) is attached in the frame (2).

8. A visual display unit as claimed in one of Claims 1 to 7, characterised in that the frame (2) consists of one part.

9. A visual display unit as claimed in one of Claims 1 to 8, characterised in that the frame (2) consists of a plurality of parts.

10. A visual display unit as claimed in Claim 9, characterised in that the parts (2', 2'') of the multi-part frame (2) are connected to tone another by a spring lock (12).

11. A visual display unit as claimed in one of Claims 1 to 10, characterised in that the frame (2) is detachably attached to the basic housing (6).

12. A visual display unit as claimed in one of Claims 1 to 11, characterised in that an opening for a light-sensitive element is arranged in an upper corner of the frame (2).

## Revendications

1. Appareil à écran de visualisation comportant un tube image (11) et un boîtier entourant le tube image (11), le boîtier comportant un boîtier de base (6) entourant la partie arrière du tube image (11), et un cadre (2) relié à ce boîtier de base et entourant la surface (1) de l'écran du tube image (11), caractérisé par le fait qu'un cadre (2) de taille différent peut être fixé horizontalement ou verticalement au boîtier de base (6) conformément à un tube image respectivement utilisé, sans modification de ce boîtier de base (6).

2. Appareil à écran de visualisation suivant la revendication 1, caractérisé par le fait que le cadre (2) peut être fixé sur des platines de base (8) du boîtier de base (6) de l'appareil à écran de visualisation.

3. Appareil à écran de visualisation suivant la revendication 1, caractérisé par le fait que le cadre (2) peut être fixé directement sur le boîtier de base (6) lui-même.

4. Appareil à écran de visualisation suivant l'une des revendications 1 à 3, caractérisé par le fait que le cadre (2) peut être fixé, selon une fixation à symétrie axiale, au boîtier de base (6).

5. Appareil à écran de visualisation suivant l'une des revendications 1 à 4, caractérisé par le fait que le boîtier de base (6) possède une section transversale à symétrie axiale.

6. Appareil à écran de visualisation suivant l'une des revendications 1 à 5, caractérisé par le fait que le boîtier de base est réalisé sous la forme d'un cube, auquel cas les différents cadres (2) peuvent être fixés sur une surface dégagée.

7. Appareil à écran de visualisation suivant l'une des revendications 1 à 6, caractérisé par le fait que le tube image (11) est fixé dans le cadre (2).

8. Appareil à écran de visualisation suivant l'une des revendications 1 à 7, caractérisé par le fait que le cadre (2) est réalisé sous une forme monobloc.

9. Appareil à écran de visualisation suivant l'une des revendications 1 à 8, caractérisé par le fait que le cadre (2) est réalisé en plusieurs éléments.

10. Appareil à écran de visualisation suivant la revendication 9, caractérisé par le fait que les parties (2',2") du cadre (2) formé de plusieurs éléments sont reliées entre elles par un dispositif de fermeture encliquetable (12).

11. Appareil à écran de visualisation suivant l'une des revendications 1 à 10, caractérisé par le fait que le cadre (2) peut être fixé de façon amovible au boîtier de base (6).

12. Appareil à écran de visualisation suivant l'une des revendications 1 à 11, caractérisé par le fait qu'une ouverture pour un élément photosensible est ménagée dans l'angle supérieur du cadre (2).

FIG 1

FIG 4

FIG 2

FIG 5

FIG 3

FIG 6

7

## FIG 7

## FIG 8

## FIG 9